# EUROPEAN PATENT APPLICATION

(11) **EP 4 040 540 A1**
(43) Date of publication of application: **10.08.2022**
(21) Application number: 20873086.1
(22) Date of filing: 06.08.2020
(51) Int. Cl.: H01M 4/485, C01B 33/32, H01M 4/36

(54) **NEGATIVE ELECTRODE ACTIVE MATERIAL, NEGATIVE ELECTRODE, AND METHOD FOR MANUFACTURING NEGATIVE ELECTRODE ACTIVE MATERIAL**

(30) Priority: 03.10.2019 JP 2019182833
(71) Applicant: Shin-Etsu Chemical Co., Ltd., Tokyo 100-0005 (JP)
(72) Inventor: HIROSE Takakazu, Annaka-shi, Gunma 379-0125 (JP); OSAWA Yusuke, Annaka-shi, Gunma 379-0125 (JP); FURUYA Masahiro, Annaka-shi, Gunma 379-0125 (JP); SAKAI Reiko, Annaka-shi, Gunma 379-0125 (JP); TAKAHASHI Kohta, Annaka-shi, Gunma 379-0125 (JP); MATSUNO Takumi, Annaka-shi, Gunma 379-0125 (JP)
(74) Representative: Sonnenhauser, Thomas Martin
(86) International application number: PCT/JP2020/030159
(87) International publication number: WO 2021/065200

(57) **Abstract**

The present invention is a negative electrode active material containing negative electrode active material particles including, silicon compound particles containing a silicon compound containing oxygen, and at least a part of a surface of the silicon compound particles is covered with a carbon layer, wherein the silicon compound particles contain Li₆Si₂O₇ and Li₂SiO₃. As a result, the negative electrode active material is provided that can increase the battery capacity with the improvement of the initial efficiency, and a capable of realizing sufficient battery cycle characteristics.

## Description

### TECHNICAL FIELD

The present invention relates to a negative electrode active material, a negative electrode, and a method for producing negative electrode active material.

### BACKGROUND ART

In recent years, small electronic devices, represented by mobile terminals, have been widely used and urgently required to reduce the size and weight and to increase the life. Such market requirements have advanced the development of particularly small, lightweight secondary batteries with higher energy density. These secondary batteries are considered to find application not only for small electronic devices but for large electronic devices such as, typically, automobiles as well as power storage systems such as, typically, houses.

Among those, lithium-ion secondary batteries are easy to reduce the size and increase the capacity and have higher energy density than those of lead or nickel-cadmium batteries, receiving considerable attention.

The lithium-ion secondary battery has positive and negative electrodes, a separator, and an electrolyte. The negative electrode includes a negative electrode active material related to charging and discharging reactions.

A negative electrode active material, which is usually made of a carbon-based active material, is required to further improve the battery capacity for recent market requirements. Use of silicon as a negative electrode active material is considered to improve the battery capacity, for silicon has a theoretical capacity (4199 mAh/g) ten times larger than does graphite (372 mAh/g). Such a material is thus expected to significantly improve the battery capacity. The development of silicon materials for use as negative electrode active materials includes not only silicon as a simple but also alloy thereof and a compound thereof such as typically oxides. The consideration of active material shapes ranges from an application type, which is standard for carbon materials, to an integrated type in which the materials are directly accumulated on a current collector.

Use of silicon as a main material of a negative electrode active material, however, expands or shrinks a negative electrode active material when charging or discharging, thereby making the negative electrode active material easy to break particularly near its surface layer. In addition, this active material produces ionic substances in its interior and is thus easy to break. The breakage of the surface layer of the negative electrode active material creates a new surface, increasing a reaction area of the active material. The new surface then causes the decomposition reaction of an electrolyte and is coated with a decomposition product of the electrolyte, thereby consuming the electrolyte. This makes the cycle characteristics easy to reduce.

Various materials and configurations of a negative electrode for a lithium-ion secondary battery mainly using a silicon material have been considered to improve the initial efficiency and the cycle characteristics of the battery.

Specifically, a vapor deposition method is used to accumulate silicon and amorphous silicon dioxide simultaneously so that better cycle characteristics and greater safety are achieved (See Patent Document 1, for example). Moreover, a carbon material (an electronic conduction material) is disposed on the surface of silicon oxide particles so that a higher battery capacity and greater safety are achieved (See Patent Document 2, for example). Moreover, an active material including silicon and oxygen is produced to form an active material layer having a higher ratio of oxygen near a current collector so that improved cycle characteristics and higher input-output performance are achieved (See Patent Document 3, for example). Moreover, silicon active material is formed so as to contain oxygen with an average content of 40 at % or less and with a higher oxygen content near a current collector so that improved cycle characteristics is achieved (See Patent Document 4, for example).

Moreover, a nano-complex including Si-phase, SiO₂, M_{y}O metal oxide is used to improve the first charge and discharge efficiency (See Patent Document 5, for example). To improve the cycle characteristics, SiOₓ (0.8≤x≤1.5, the range of particle size=1 µm to 50 µm) and a carbon material are mixed and calcined at a high temperature (See Patent Document 6, for example). The active material is controlled by adjusting a mole ratio of oxygen to silicon in a negative electrode active material in the range from 0.1 to 1.2 so as to hold a difference between the maximum and the minimum of the oxygen-to-silicon mole ratio near the interface between the active material and a current collector at 0.4 or less, so that improved cycle characteristics are achieved (See Patent Document 7, for example). Moreover, a metal oxide containing lithium is used to improve the battery load characteristic (See Patent Document 8, for example). To improve the cycle characteristics, a hydrophobic layer such as a silane compound layer is formed on the surface of a silicon material (See Patent Document 9, for example). Moreover, a silicon oxide is used and coated with graphite coating to give electric conductivity so that improved cycle characteristics are achieved (See Patent Document 10, for example). In Patent Document 10, the graphite coating exhibits a Raman spectrum that has broad peaks at shift values of 1330 cm⁻¹ and 1580 cm⁻¹, and their intensity ratio I₁₃₃₀/I₁₅₈₀ satisfies 1.5<I₁₃₃₀/I₁₅₈₀<3. Similarly, particles having a silicon microcrystal phase dispersed in a silicon dioxide are used to achieve a higher battery capacity and improved cycle characteristics (See Patent Document 11, for example). Moreover, a silicon oxide having a silicon-to-oxygen atomicity ratio of 1:y (0<y<2) is used to improve overcharge and overdischarge performance (See Patent Document 12, for example).

Further, as lithium-ion secondary battery using silicon oxide, Hitachi Maxell, Ltd. has started shipping prismatic secondary batteries for smart phone which employ nano-silicon composite, since June in 2010 (see Non Patent Document 1, for example). Silicon oxide proposed by Hohl is in the form of a composite material with Si⁰⁺ to Si⁴⁺ having various oxidation states (see Non Patent Document 2). Moreover, Kapaklis has proposed a disproportionation structure in which silicon oxide is converted into Si and SiO₂ by receiving heat load (see Non Patent Document 3).

Miyachi et al. have focused on Si and SiO₂, which contribute to charge and discharge, in silicon oxide having disproportionation structure (see Non Patent Document 4). Yamada et al. have proposed a reaction equation between silicon oxide and Li as follows (see Non Patent Document 5) .

2SiO (Si + SiO₂) + 6.85Li⁺ + 6.85e⁻→ 1.4Li_{3.75}Si + 0.4Li₄SiO₄ + 0.2SiO₂

In the reaction equation, Si and SiO₂ constituting silicon oxide react with Li, so that the starting material is converted and separated into Li silicide, Li silicate, and partially-unreacted SiO₂.

The resulting Li silicate is irreversible; once formed, it is a stable substance and does not release Li. The capacity per mass calculated from this reaction equation has a value close to experimental values, and the reaction equation is recognized as the reaction mechanism of silicon oxide. In Kim et al., irreversible component, Li silicate, in charging and discharging of silicon oxide has been identified in the form of Li₄SiO₄ by employed ⁷Li-MAS-NMR and ²⁹Si-MAS-NMR (see Non Patent Document 6).

The most disadvantageous aspect of silicon oxide is the irreversible capacity, and the improvement has been demanded. Hence, Kim et al. have greatly improved the initial battery efficiency by employed a prelithiation method in which Li silicate is formed in advance, and prepared a negative electrode applicable to actual uses (see Non Patent Document 7).

Furthermore, instead of the method of doping an electrode with Li, there has been proposed a method of treating a powder to improve the irreversible capacity (See Patent Document 13).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A

### NON PATENT LITERATURE

Non Patent Document 1: Battery Association of Japan, Newsletter "Denchi (battery)", May 1, 2010, p. 10
Non Patent Document 2: A. Hohl, T. Wieder, P. A. van Aken, T. E. Weirich, G. Denninger, M. Vidal, S. Oswald, C. Deneke, J. Mayer, and H. Fuess : J. Non-Cryst. Solids, 320, (2003), 255 .
Non Patent Document 3: V. Kapaklis, J. Non-Crystalline Solids, 354 (2008) 612
Non Patent Document 4: Mariko Miyachi, Hironori Yamamoto, and Hidemasa Kawai, J. Electrochem. Soc. 2007 volume 154, issue 4, A376-A380
Non Patent Document 5: M. Yamada, A. Inaba, A. Ueda, K. Matsumoto, T. Iwasaki, T. Ohzuku, J. Electrochem. Soc., 159, A1630 (2012)
Non Patent Document 6: Taeahn Kim, Sangjin Park, and Seung M. Oh, J. Electrochem. Soc. volume 154, (2007), A1112-A1117.
Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.

### SUMMARY OF INVENTION

### TECHNICAL PROBLEM

As described above, small electronic devices, represented by mobile devices, have been advancing recently toward high performance and multifunction, and a lithium-ion secondary battery that is main electric source thereof is required to increase the battery capacity. As a technique to solve this problem, it is desired to develop a lithium-ion secondary battery containing a negative electrode using a silicon material as a main material. Moreover, such a lithium-ion secondary battery using a silicon material is desired to have initial charge-discharge characteristics and cycle characteristics almost equivalent to those of a lithium-ion secondary battery using a carbon-based active material. Accordingly, the cycle characteristics and initial charge-discharge characteristics have been improved by using a negative electrode active material that is silicon oxide modified by insertion and partial release of Li. However, it was discovered that the generated Li silicate repeats decomposition and generation with charging and discharging. As a result, the capacity was reduced at the initial stage of the charge-discharge cycle, and the decomposition of the electrolyte in the surface layer was promoted, so that the battery characteristics were not sufficient.

The present invention has been made in view of the above problems, and an object of the present invention is to provide a negative electrode active material capable of increasing battery capacity and achieving sufficient battery cycle characteristics with improvement in initial efficiency. Another object of the present invention is to provide a negative electrode for a non-aqueous electrolyte secondary battery containing such a negative electrode active material.

### SOLUTION TO PROBLEM

In order to solve the above object, the present invention provides a negative electrode active material containing negative electrode active material particles including, silicon compound particles containing a silicon compound containing oxygen, and at least a part of a surface of the silicon compound particles is covered with a carbon layer, wherein the silicon compound particles contain Li₆Si₂O7 and Li₂SiO₃.

Since the negative electrode active material of the present invention (hereinafter, also referred to as a silicon-based negative electrode active material) contains negative electrode active material particles containing silicon compound particles (hereinafter, also referred to as silicon-based negative electrode active material particles), the battery capacity can be improved. Further, since the silicon compound particles contain Li compounds (Li₆Si₂O₇ and Li₂SiO₃) that are stable against charge and discharge, the first time efficiency (also referred to as initial efficiency) can be improved when they are used as a negative electrode active material of a secondary battery. Further, by coating the carbon layer, conductivity is imparted. Li silicate is further generated inside the particles. It is presumed that by containing not only the generally obtained Li₂SiO₃ but also Li₆Si₂O₇, which is generated in the process of chemically changing from Li₂Si₂O₅ to Li₂SiO₃, inside the particles the Li diffusivity inside the particles can be improved. As a result, Li is likely to move and Li silicate is easily generated, so that it is presumed that the Li silicate formation decomposition behavior at the time of initial deterioration of the cycle can be alleviated. Therefore, it is possible to improve the initial charge-discharge characteristics while obtaining high cycle characteristics, and as a result, increase the battery capacity.

At this time, it is preferable that in the silicon compound particles, intensity A of a shoulder peak of amorphous silicon given in the vicinity of -50 ppm as a chemical shift value, intensity B of a peak derived from Li₆Si₂O7, and intensity C of a peak derived from Li₂SiO₃, the peaks being obtained from a ²⁹Si-MAS-NMR spectrum, satisfy a relationship A<B<C.

If the relationship of A<B is satisfied, Li₆Si₂O₇ is sufficiently contained as compared with amorphous silicon, and the diffusivity of Li is further improved. Further, if the relationship of B<C is satisfied, Li₂SiO₃ having high Li diffusivity is sufficiently present, so that the Li diffusivity inside the particles is more reliably improved.

Further, it is preferable that the true density of the negative electrode active material is larger than 2.3 g/cm³ and smaller than 2.4 g/cm³.

When the true density of the negative electrode active material coated with the carbon layer is larger than 2.3 g/cm³, the battery characteristics are more stable because the Li silicate (Li₆Si₂O7, Li₂SiO₃, etc.) is sufficiently contained. Further, if it is smaller than 2.4 g/cm³, the formation of Li silicate does not become excessive, so that the decrease in Li diffusivity inside the particles can be suppressed.

Further, it is preferable that Li₂SiO₃ contained in the silicon compound particles has crystallinity.

When Li₂SiO₃ has crystallinity, the stability of Li₂SiO₃ can be improved, so that it is possible to improve the Li diffusivity inside the particles and suppress the elution of Li when the negative electrode active material is made into a slurry. The stability to the slurry used when manufacturing the electrodes and the cycle characteristics of the battery are further improved.

Further, in the silicon compound particles, it is preferable that intensity D of a peak derived from Li₂Si₂O₅ obtained from a ²⁹Si-MAS-NMR spectrum of the silicon compound particles is smaller than intensity B of a peak derived from Li₆Si₂O₇.

In such a case, Li₆Si₂O₇ that contributes to the diffusivity of Li is sufficiently contained, and Li₂Si₂O₅ having a low Li diffusivity in the bulk is sufficiently reduced, so that the Li diffusivity inside of the silicon compound particles is more reliably improved.

Further, it is preferable that the carbon layer has a substantially two-layer structure including a conductive carbon layer and a reaction suppressing layer on the conductive carbon layer.

A substantially two-layer structure including a conductive carbon layer formed to provide conductivity and a reaction suppressing layer formed on the conductive carbon layer for the purpose of reducing reactivity with an electrolyte when manufacturing a battery. By having it, the cycle characteristics of the battery are further improved.

Further, it is preferable that the negative electrode active material particles have a median diameter of 4.0 µm or more and 12 µm or less.

When the median diameter is 4.0 µm or more, the surface area per volume does not become too large, so that the reaction with the electrolyte can be suppressed and the battery characteristics are improved. On the other hand, when the median diameter is 12 µm or less, the particles are less likely to crack, so that it is possible to suppress the loss of electronic contacts due to the expansion of the active material due to charging and discharging.

Further, it is preferable that a half-value width (2θ) of the diffraction peak caused by the Si (111) crystal plane obtained by X-ray diffraction using Cu-Kα rays is 1.2° or more, and size of crystallite corresponding the crystal plane is 7.0 nm or less.

If the negative electrode active material in which the silicon compound particles having the above-mentioned silicon crystallinity are used as the negative electrode active material of the lithium-ion secondary battery, better cycle characteristics and initial charge-discharge characteristics can be obtained.

The present invention also provides a negative electrode including the above mentioned negative electrode active material.

With such a negative electrode, when this negative electrode is used as the negative electrode of a lithium-ion secondary battery, the battery capacity and initial efficiency can be improved, and sufficient cycle characteristics can be obtained.

Further, the present provides a method for producing a negative electrode active material containing a negative electrode active material particles including the steps of: producing a silicon compound particles containing silicon compounds containing oxygen, coating at least a part of the silicon compound particles with a carbon layer and inserting Li into the silicon compound particles and incorporating Li₆Si₂O₇ and Li₂SiO₃ into the silicon compound particles.

With such a method for producing a negative electrode active material, when the manufactured negative electrode active material is used as the negative electrode active material of a secondary battery, a negative electrode active material can be manufactured with favorable initial efficiency as well as a high battery capacity while obtaining good cycle characteristics.

### ADVANTAGEOUS EFFECTS OF INVENTION

Since the negative electrode active material of the present invention contains a negative electrode active material particles containing a silicon compound particles, the battery capacity can be improved. Further, since the silicon compound particles contain Li compounds (Li₆Si₂O₇ and Li₂SiO₃) that are stable against charge and discharge, the initial efficiency of the battery can be improved when used as the negative electrode active material of the secondary battery. Further, by coating the carbon layer, conductivity is imparted. Li silicate is generated inside the particles. It is presumed that by containing not only the generally obtained Li₂SiO₃ but also Li₆Si₂O₇ which is generated in the process of chemically changing from Li₂Si₂O₅ to Li₂SiO₃, inside the particles, the Li diffusivity inside the particles can be improved. As a result, Li is likely to move and Li silicate is easily generated, so that it is presumed that the Li silicate formation decomposition behavior at the time of initial deterioration of the cycle can be alleviated. Therefore, it is possible to improve the initial charge-discharge characteristics while obtaining high cycle characteristics, and as a result, increase the battery capacity.

Further, according to the method for producing a negative electrode active material of the present invention, a negative electrode active material having a high capacity and good initial charge-discharge characteristics when used as a negative electrode active material of a secondary battery while obtaining favorable cycle characteristics can be manufactured.

### BRIEF DESCRIPTION OF DRAWINGS

FIG. 1 is an enlarged view of a ²⁹Si-MAS-NMR spectrum measured from silicon compound particles of Examples 1-1 to 1-3.
FIG. 2 is a ²⁹Si-MAS-NMR spectrum measured from silicon compound particles of Examples 1-1 to 1-3.
FIG. 3 is a ²⁹Si-MAS-NMR spectrum measured from the silicon compound particles of Comparative Example 2.
FIG. 4 is a cross-sectional view showing an example of the configuration of the negative electrode of the present invention.
FIG. 5 is an exploded view showing an example of the configuration of a lithium-ion secondary battery (laminated film type) using the negative electrode of the present invention.

### DESCRIPTION OF EMBODIMENTS

Hereinafter, embodiments of the present invention will be described, but the present invention is not limited thereto.

As described above, as a technique to increase the battery capacity of lithium-ion secondary battery, there has been investigated the use of a negative electrode mainly made from silicon-based active material as a negative electrode for lithium-ion secondary battery. Such a lithium-ion secondary battery using silicon-based active material is desired to have initial charge-discharge characteristics almost equivalent to those of a lithium-ion secondary battery using a carbon-based active material. Further, in the Li-doped SiO that can improve the initial charge-discharge characteristics, it is desired that the cycle characteristics are close to those of the carbon-based active material. However, it has not reached to propose a negative electrode active material that provides initial charge-discharge characteristics equivalent to those of a carbon-based active material and exhibits cycle characteristics equivalent to those of a carbon-based active material, when used as a negative electrode active material for a lithium-ion secondary battery.

Therefore, the present inventors have repeated diligent studies in order to obtain a negative electrode active material that can improve the initial charge-discharge characteristics while obtaining high cycle characteristics, and can increase the battery capacity when used as the of the secondary battery, and as a result, have been reached the present invention.

### <Negative electrode active material of the present invention>

The negative electrode active material of the present invention contains negative electrode active material particles. The negative electrode active material particles contain silicon oxide compound particles. At least a part of a surface of the silicon compound particles is covered with a carbon layer, and they contain Li₆Si₂O₇ and Li₂SiO₃.

Since the negative electrode active material of the present invention contains negative electrode active material particles containing silicon compound particles, the battery capacity can be improved. Further, since the silicon compound particles contain Li compounds (Li₆Si₂O₇ and Li₂SiO₃) that are stable against charge and discharge, the initial efficiency of the battery can be improved when used as the negative electrode active material of the secondary battery. Further, by coating the carbon layer, conductivity is imparted. Li silicate is further generated inside the particles. It is presumed that by containing not only the generally obtained Li₂SiO₃ but also Li₆Si₂O₇, which is generated in the process of chemically changing from Li₂Si₂O₅ to Li₂SiO₃, inside the particles the Li diffusivity inside the particles can be improved. As a result, Li is likely to move and Li silicate is easily generated, so that it is presumed that the Li silicate formation decomposition behavior at the time of initial deterioration of the cycle can be alleviated. Therefore, it is possible to improve the initial charge-discharge characteristics while obtaining high cycle characteristics, and as a result, increase the battery capacity.

In particular, the type of Li silicate correlates with Li diffusion in the bulk. For example, Li₂SiO₃ has a one-dimensional chain structure of Si-O, but Li₂Si₂O₅ has a two-dimensional chain structure, so that the Li diffusivity in the bulk of Li₂Si₂O₅ is lower than that of Li₂SiO₃-Therefore, it is desirable to chemically change the Li compound in the silicon compound particles to Li₂SiO₃, but if all the chemical changes are made, the grain boundaries are strongly generated, which makes it difficult to diffuse Li. Therefore, by containing Li₆Si₂O₇, which is generated in the process of chemically changing from Li₂Si₂O₅ to Li₂SiO₃, together with Li₂SiO₃, the Li diffusivity inside the particles can be improved.

Further, it is preferable that in the silicon compound particles, intensity A of a shoulder peak of amorphous silicon given in the vicinity of -50 ppm as a chemical shift value, intensity B of a peak derived from Li₆Si₂O₇, and intensity C of a peak derived from Li₂SiO₃, the peaks being obtained from a ²⁹Si-MAS-NMR spectrum, satisfy a relationship A<B<C.

It is considered that the diffusivity of Li is higher inside the Li silicate (Li₆Si₂O₇ and Li₂SiO₃) than in the amorphous silicon. If the relationship of A<B is satisfied, Li₆Si₂O₇ is sufficiently contained as compared with amorphous silicon, and if the relationship of B<C is satisfied, Li₂SiO₃ having high diffusivity of Li is sufficiently present. Therefore, the Li diffusivity inside the particles is more reliably improved.

Further, in the silicon compound particles, it is preferable that the intensity D of a peak derived from Li₂Si₂O₅ obtained from the ²⁹Si-MAS-NMR spectrum is smaller than the intensity B of the peak derived from Li₆Si₂O₇.

In such a case, Li₆Si₂O7 that contributes to the diffusivity of Li is sufficiently contained, and Li₂Si₂O₅ having a low Li diffusivity in the bulk is sufficiently reduced. The Li diffusivity inside of the silicon compound particles is more reliably improved.

In the ²⁹Si-MAS-NMR spectrum, a peak at which the chemical shift value appears at a position near -70 ppm is derived from Li₆Si₂O₇, and a peak at which the chemical shift value appears at a position near -72 to 75 ppm is derived from Li₂SiO₃. A peak at which the chemical shift value appears in the vicinity of -93 ppm is derived from Li₂Si₂O₅.

Further, it is preferable that the true density of the negative electrode active material is larger than 2.3 g/cm³ and smaller than 2.4 g/cm³. The true density may be measured by a commonly used method. In particular, for the measurement of this true density, a measuring method by a gas replacement method using helium gas can be used. As the measuring device, for example, an automatic true density analyzer Macpycno manufactured by Mountech Co., Ltd. can be used.

When the true density of the negative electrode active material coated with the carbon layer is larger than 2.3 g/cm³, the battery characteristics are more stable because the Li silicate (Li₆Si₂O₇, Li₂SiO₃, etc.) is sufficiently contained. Further, if the true density of the negative electrode active material coated with the carbon layer is smaller than 2.4 g/cm³, the formation of Li silicate does not become excessive, so that the decrease in Li diffusivity inside the particles can be suppressed.

Further, it is preferable that Li₂SiO₃ contained in the silicon compound particles has crystallinity. Since Li₂SiO₃ has crystallinity, it is possible to suppress the elution of Li when the negative electrode active material is made into a slurry, and the stability to the slurry used at the time of producing the electrode and the cycle characteristics of the battery are further improved. The crystallinity of Li₂SiO₃ can be confirmed by, for example, X-ray diffraction measurement. Specifically, it can be confirmed by checking that the half-value width (2θ) of the diffraction peak caused by Li₂SiO₃ obtained by X-ray diffraction using Cu-Kα rays is, for example, 3° or less, preferably 1.7° or less.

Further, it is preferable that the carbon layer has a substantially two-layer structure of a conductive carbon layer and a reaction suppressing layer on the conductive carbon layer. The substantially two-layer structure including a conductive carbon layer formed to provide conductivity and a reaction suppressing layer formed on the conductive carbon layer for the purpose of reducing reactivity with an electrolyte when manufacturing a battery. By having it, the cycle characteristics of the battery are further improved.

The total film thickness of the carbon layer is preferably thin and uniform, but if the thickness is 5 nm or more, both the conductivity and the reaction suppression layer can be compatible. The total film thickness of the carbon layer is not particularly limited, but is preferably 500 nm or less because the battery capacity does not decrease. Further, among the two-layer structure of the carbon layer, the reaction suppressing layer may have a lower conductivity than the conductive carbon layer.

Further, the median diameter of the negative electrode active material particles is preferably 4.0 µm or more and 12 µm or less. When the median diameter is 4.0 µm or more, the surface area per volume does not become too large, so that the reaction with the electrolyte can be suppressed and the battery characteristics are improved. On the other hand, when the median diameter is 12 µm or less, the particles are less likely to crack, so that it is possible to suppress the loss of electronic contacts due to the expansion of the active material due to charging and discharging. Further, more preferably, the median diameter is 5.0 µm or more and 10 µm or less.

Further, the negative electrode active material has a half-value width (2θ) of a diffraction peak due to the Si (111) crystal plane obtained by X-ray diffraction using Cu-Kα rays and has a crystal of 1.2° or more. The crystallite size corresponding to the crystal plane is preferably 7.0 nm or less. If the negative electrode active material in which the silicon compound particles have the above-mentioned silicon crystallinity is used as the negative electrode active material of the lithium-ion secondary battery, better cycle characteristics and initial charge-discharge characteristics can be obtained.

Further, it is desirable that the silicon compound does not contain crystalline Si as much as possible. As described above, as long as it does not contain crystalline Si as much as possible, the reactivity with the electrolyte does not become too high and the battery characteristics are not deteriorated. Further, it is desirable that Si in the silicon compound is substantially amorphous.

### <Negative electrode>

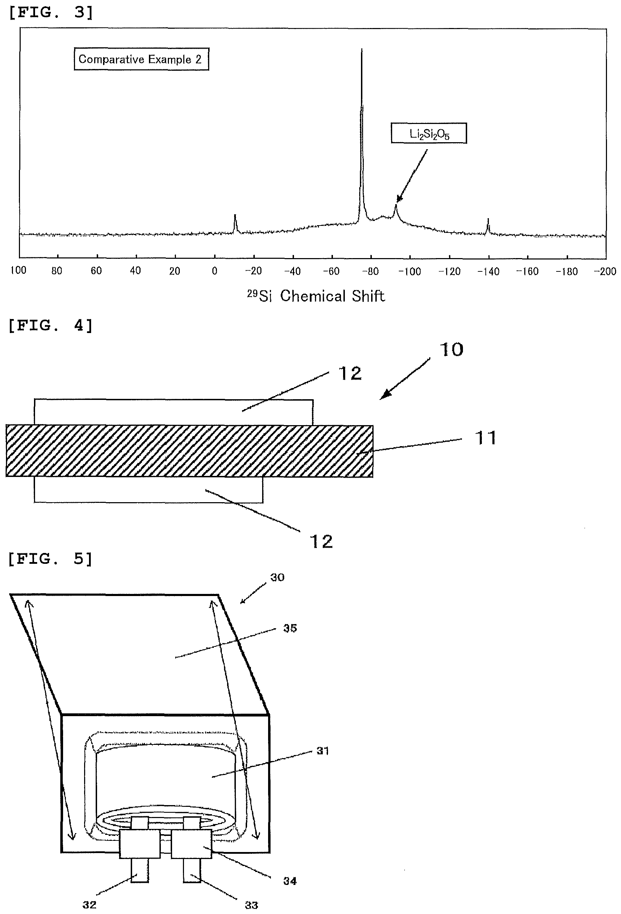

First, the negative electrode (negative electrode for non-aqueous electrolyte secondary batteries) will be described. FIG. 4 is a cross-sectional view showing an example of the configuration of the negative electrode of the present invention.

### [Configuration of Negative Electrode]

As shown in FIG. 4, the negative electrode 10 is constituted to have the negative electrode active material layer 12 on the negative electrode current collector 11. This negative electrode active material layer 12 may be disposed on the both sides or only one side of the negative electrode current collector 11. When the inventive negative electrode active material is used, the negative electrode current collector 11 is not essential.

### [Negative Electrode Current Collector]

The negative electrode current collector 11 is made of a highly electric conductive and mechanically strong material. Examples of the electric conductive material used for the negative electrode current collector 11 include copper (Cu) and nickel (Ni). This electric conductive material is preferably a material that does not form an intermetallic compound with lithium (Li).

The negative electrode current collector 11 preferably contains carbon (C) and sulfur (S) besides the main element because these elements improve the physical strength of the negative electrode current collector. In particular, when the negative electrode has an active material layer that expands in charging, the current collector containing the above elements can prevent deformation of an electrode including the current collector. Each content of the contained elements is not particularly limited, but is preferably 100 ppm by mass or less. Since this improves effect of preventing deformation. Such effect of preventing deformation further improves the cycle characteristics.

The surface of the negative electrode current collector 11 may or may not be roughened. Examples of the negative electrode current collector roughened include a metallic foil subjected to an electrolyzing process, an embossing process, or a chemical etching process. Examples of the negative electrode current collector that is not roughened include a rolled metallic foil.

### [Negative Electrode Active Material Layer]

The negative electrode active material layer 12 contains the inventive negative electrode active material, which is capable of occluding and releasing lithium ions. In view of battery design, other materials may be further contained, such as a negative electrode binding agent (binder) or a conductive assistant agent. The negative electrode active material contains negative electrode active material particles, and the negative electrode active material particles contain silicon compound particles containing a silicon compound containing oxygen.

The negative electrode active material layer 12 may contain a mixed negative electrode active material that contains the inventive negative electrode active material (silicon-based negative electrode active material) and a carbon-based active material. This makes it possible to decrease the electric resistance of the negative electrode active material layer and to ease the expanding stress due to charging. As the carbon-based active material, pyrolytic carbons, cokes, glassy carbon fiber, baked organic polymer compounds, and carbon black are usable.

Further, the inventive negative electrode active material contains silicon compound particles as described above, and the silicon compound particles are each a silicon oxide material containing an oxygen-containing silicon compound. This silicon compound preferably contains silicon and oxygen as SiOₓ in a ratio within 0.5≤x≤1.6. When "x" is 0.5 or more, the oxygen ratio is higher than that of silicon single substance, making the cycle characteristics favorable. When "x" is 1.6 or less, it is preferable that the resistance of silicon oxide becomes not too high. Particularly, in the composition of SiOₓ, "x" is preferably close to 1 because higher cycle characteristics can be obtained. Note that the composition of the silicon compound in the present invention does not necessarily mean purity of 100%, and may contain a small quantity of impurity elements.

Further, in the negative electrode active material of the present invention, the silicon compound particles contain a Li compound. More specifically, the silicon compound particles contain Li₆Si₂O₇ and Li₂SiO₃. Such a thing can reduce irreversible capacity occurring at the time of charging, because SiO₂ component part in the silicon compound, which becomes unstable at the time of insertion and desorption of lithium at the time of charge-discharge of a battery, is modified into another lithium silicate in advance. Further, it is preferable to enlarge the Li silicate within a range in which the crystal growth of Si is suppressed, whereby the irreversible capacity associated with charging and discharging can be further reduced.

Further, Li₂SiO₃ and Li₆Si₂O7 inside the bulk of the silicon compound particles can be quantified by NMR (Nuclear Magnetic Resonance). The NMR measurement can be performed, for example, under the following conditions. ²⁹Si-MAS-NMR (magic angle spinning Nuclear Magnetic Resonance).
Apparatus: a 700-NMR spectroscope made by Bruker Corp., Probe: a 4-mm HR-MAS rotor, 50 µL,
Sample Spinning Speed: 10 kHz,
Measurement Environment Temperature: 25°C.

As the negative electrode binder contained in the negative electrode active material layer, any one or more of polymer material, synthetic rubber, and so on are usable, for example. Illustrative examples of the polymer material includes polyvinylidene fluoride, polyimide, polyamideimide, aramid, polyacrylic acid, lithium polyacrylate, sodium polyacrylate and carboxymethyl cellulose. Illustrative examples of the synthetic rubber includes styrene-butadiene rubber, fluororubber, and ethylene-propylene-diene.

As the negative electrode conductive assistant agent, any one or more of a carbon material, such as carbon black, acetylene black, graphite, ketjen black, carbon nanotube, and carbon nanofiber can be used.

The negative electrode active material layer is formed by an application method, for example. The application method is a method in which silicon-based negative electrode active material particles are mixed with the above mentioned binder and so on, optionally with a conductive assistant agent or a carbon-based active material, and then dispersed to organic solvent, water, or the like so as to be applied.

### [Method of Producing Negative Electrode]

Subsequently, a method for producing the negative electrode active material of the present invention will be described.

First, silicon compound particles containing a silicon compound containing oxygen are prepared. Hereinafter, a case where silicon oxide represented by SiOₓ (0.5≤x≤1.6) is used as the silicon compound containing oxygen will be described. First, the raw material that generates silicon oxide gas is heated in a temperature range of 900°C to 1600°C under reduced pressure in the presence of the inert gas to generate silicon oxide gas. At this time, a mixture of metallic silicon powder and silicon dioxide powder can be used as the raw material. Considering the presence of surface oxygen of the metallic silicon powder and trace oxygen in the reaction furnace, it is desirable that the mixed molar ratio is in a range of 0.8 <metallic silicon powder / silicon dioxide powder < 1.3.

The generated silicon oxide gas is solidified and deposited on an absorbing plate. Subsequently, the deposit of silicon oxide is taken out under the condition of the temperature in the reaction furnace of 100°C or below, and then the deposit is ground and powdered using a ball mil, a jet mil, or the like. As described above, silicon compound particles can be produced. The Si crystallite in the silicon compound particles can be controlled by changing the vaporization temperature of the raw material that generates silicon oxide gas or by heat treatment after the silicon compound particles are generated.

On at least a part of the surface layer of the silicon compound particles, a carbon material layer (carbon layer) may be formed. As a method to form the carbon material layer, a thermal decomposition CVD method is desirable. Hereinafter, an example of the method for forming a carbon material layer by thermal decomposition CVD method will be described.

First, silicon compound particles are set in a furnace. Then, a hydrocarbon gas is introduced into the furnace, and the temperature in the furnace is raised. The pyrolysis temperature is preferably, but not particularly limited to, 1200°C or less, more preferably 950°C or less. When the pyrolysis temperature is 1200°C or less, it is possible to prevent unintentional disproportionation of active material particles. After raising the furnace temperature to a prescribed temperature, a carbon layer is formed onto the surface of the silicon compound particles. The hydrocarbon gas to be a raw material of the carbon material is not particularly limited, but preferably has a composition of CnHm where n≤3. When n≤3, it is possible to decrease the production cost and to improve the properties of the decomposition products.

Then, into the silicon-based active material particles produced as described above, Li is inserted, thereby bringing a Li compound to be contained. That is, as a result, the silicon compound particles are modified, and a Li compound (Li₆Si₂O₇, Li₂SiO₃) is generated inside the silicon compound particles. It is preferable to insert Li by a redox method.

In the modification by an oxidation and reduction method, lithium can be inserted by immersing silicon active material particles into solution-A in which lithium is dissolved into ether-based solvent, for example. This solution-A may also contain a polycyclic aromatic compound or a linear polyphenylene compound additionally. After inserting lithium, active lithium can be extracted from the silicon active material particles by immersing the silicon active material particles into solution-B that contains a polycyclic aromatic compound or its derivative. Illustrative examples of solvents usable for this solution-B include ether-based solvents, ketone-based solvents, ester-based solvents, alcohol-based solvents, amine-based solvents, and mixture thereof. The obtained silicon active material particles may be heat treated in an inert gas after being immersed to solution-A. The heat treatment allows the Li compound to be stable.

As the ether-based solvents used in the solution-A, diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, or mixed solvents thereof may be used. Among these, in particular, tetrahydrofuran, dioxane and 1,2-dimethoxy ethane may be preferably used. These solvents are preferable to be dehydrated and preferable to be deoxygenized.

Further, as the polycyclic aromatic compound contained in the solution-A, one or more kinds of naphthalene, anthracene, phenanthrene, naphthacene, pentacene, pyrene, picene, triphenylene, coronene, chrysene, and derivatives thereof are usable, and, as the straight chain polyphenylene compound, one or more kinds of biphenyl, terphenyl, and derivatives thereof may be used.

As the polycyclic aromatic compound contained in the solution-B, one or more kinds of naphthalene, anthracene, phenanthrene, naphthacene, pentacene, pyrene, picene, triphenylene, coronene, chrysene, and derivatives thereof may be used.

Further, as the ether-based solvent of the solution-B, diethyl ether, tert-butyl methyl ether, tetrahydrofuran, dioxane, 1,2-dimethoxy ethane, diethylene glycol dimethyl ether, triethylene glycol dimethyl ether, and tetraethylene glycol dimethyl ether may be used.

As the ketone-based solvent, acetone, acetophenone or the like may be used.

As the ester-based solvent, methyl formate, methyl acetate, ethyl acetate, propyl acetate, and isopropyl acetate may be used.

As the amine-based solvent, methylamine, ethylamine and ethylenediamine may be used.

In order to form Li₆Si₂O₇, it is necessary to reduce the substances having OH groups present in the solvent. As the substance having an OH group existing in the solvent, for example, when diethyl ether is used as the solvent of the solution A and the solution B, H₂O brought by the solvent and those derived from H₂O adhered on the surface of the silicon compound particles coated with the carbon layer are mentioned. For example, in the case of H₂O, the water content in the solvent may be 150 ppm or less. The H₂O present in the solvent reacts with the Li surface layer used for Li doping to generate LiOH. This LiOH remains attached to the surface of the material after filtration (or after filtration and vacuum drying). It is considered that by performing the heat treatment in the next step described below with LiOH remained, an oxidized portion is generated in the particles and the diffusion of Li is hindered. Here, the oxidized portion is a compound of Li and O, and examples thereof include Li₂O and Li₂O₂.

After the Li doping treatment by the oxidation-reduction method, the material may be filtered followed by heating at 500°C or more and 650°C or less to control the kind, amount (existence ratio), or the like of the Li silicate. In such control, it is preferable to perform the heat treatment in vacuum state or inert gas. Moreover, it is desirable to employ uniform heat treatment with such a heating apparatus as a rotary kiln, although the apparatus is not limited. In this event, various Li silicate states can be created by setting vacuum state, inert gas flow rate (inner pressure), retort thickness, and the number of revolutions as factors. The heat treatment time is not particularly limited, but may be, for example, 1 to 12 hours. Those skilled in the art can experimentally easily determine what Li silicate state is obtained under what conditions. Similarly, silicon enlargement or silicon amorphization can be controlled. Those skilled in the art can experimentally easily determine under what conditions these are controlled. Further, when the SiO reacts with Li, if the concentration of Li occurs, the SiO is partially disproportionated and Si is generated. That is, when the reaction is carried out at high speed, a uniform reaction with Li does not occur, the Si-O bond is broken, and Si is generated. At this time, by controlling the insertion rate at the time of Li doping, it is possible to suppress Si generation. The insertion rate can be controlled by the concentration of the polycyclic aromatic compound and the temperature, and it is desirable to dope at 0.2 C or less with respect to the discharge capacity (0 V-1.2 V) before Li doping. By doing so, it does not affect the enlargement of Si and the formation of Li silicate in the heat treatment step. Those skilled in the art can also easily experimentally determine under what conditions the insertion rate at the time of Li doping should be controlled.

The formation of Li silicate is also due to the crystal structure of the silicon compound particles before Li doping. From the diffraction peak caused by the Si (111) crystal plane obtained by X-ray diffraction of the silicon compound particles, the crystallite size determined by Scherrer's equation is preferably 7.0 nm or less, more preferably 3 nm or less. By using silicon compound particles having a larger amount of amorphous material as a starting material and performing Li doping, the movement of Li becomes smooth and it becomes easy to control the subsequent Li silicate state.

Further, it is preferable to suppress the mixing of O₂ in the atmosphere of the heat treatment. By suppressing the mixing of O₂ before the heat treatment and during the heat treatment process, it is possible to suppress the formation of Li₂O or the like and suppress the oxidation inside the particles. By doing so, the produced Li₂O and the like do not hinder the diffusion of Li, and Li can move smoothly, so that the formation of Li₆Si₂O7 is not hindered.

Further, in the present invention, it is preferable that the carbon layer has a substantially two-layer structure of a conductive carbon layer and a reaction suppressing layer on the conductive carbon layer. The reaction suppressing layer can be formed at a temperature lower than that of the conductive carbon layer that imparts conductivity, and can be formed, for example, as follows. First, the silicon compound particles are coated with a carbon material by a CVD method, and after Li is inserted and modified, an ether solvent in which tar is dissolved is applied and dried to deposit the tar layer on the outermost layer. At this time, the tar concentration can be adjusted to adjust the amount of deposit remaining on the surface layer. The tar concentration can be adjusted to, for example, about 1% by mass. Then, heating is performed in a range of 450°C to 700°C. This heating can be performed at the same time as the heat treatment under the control of Li silicate. As a result, the tar on the outermost layer is decomposed and carbonized, and a reaction suppressing layer is provided as another carbon layer on the upper part of the conductive carbon layer obtained by the CVD method to form a two-layer structure.

The negative electrode active material produced as described above is mixed with other materials such as a negative electrode binder and a conductive assistant agent to form a negative electrode mixture. Then, organic solvent or water is added thereto to form slurry. Subsequently, the slurry is applied onto the surface of a negative electrode collector and dried to form a negative electrode active material layer. In this case, heat pressing and so on may be performed in accordance with needs. As described above, a negative electrode is successfully produced.

### <Lithium-Ion Secondary Battery>

Then, a lithium-ion secondary battery containing the inventive negative electrode active material will be described. Here exemplifies a lithium-ion secondary battery of a laminate film type as a concrete example.

### [Configuration of Laminate Film Type Lithium-Ion Secondary Battery]

The laminate film type lithium-ion secondary battery 30 shown in FIG. 5 mainly includes a wound electrode body 31 stored in sheet-shaped outer parts 35. This wound body is formed by winding a positive electrode, a negative electrode, and a separator disposed between these electrodes. There is also a case storing a laminate having a separator disposed between a positive electrode and a negative electrode without winding. The electrode bodies of both types have a positive-electrode lead 32 attached to the positive electrode and a negative-electrode lead 33 attached to the negative electrode. The outermost circumference of the electrode bodies is protected by a protecting tape.

The positive-electrode lead 32 and the negative-electrode lead 33, for example, extends from the interior of the outer parts 35 toward the exterior in one direction. The positive-electrode lead 32 is made of, for example, a conductive material such as aluminum, and the negative-electrode lead 33 is made of, for example, a conductive material such as nickel or copper.

An example of the outer part 35 is a laminate film composed of a fusion-bond layer, a metallic layer, and a surface protecting layer stacked in this order. Two laminate films are fusion-bonded or stuck with an adhesive at the outer edge of their fusion-bond layers such that each fusion-bond layer faces the electrode body 31. The fusion-bond layer may be, for example, a film such as a polyethylene or polypropylene film; the metallic layer may be aluminum foil, for example; the protecting layer may be nylon, for example.

The space between the outer parts 35 and the positive and negative electrode leads is filled with close adhesion films 34 to prevent air from entering therein. Exemplary materials of the close adhesion films include polyethylene, polypropylene, and polyolefin resins.

The positive electrode has a positive electrode active material layer disposed on one side or both sides of a positive electrode current collector as in the negative electrode 10 shown in FIG. 4, for example.

The positive electrode current collector is made of, for example, a conductive material such as aluminum.

The positive electrode active material layer contains any one kind or two kinds or more of positive electrode materials capable of occluding and releasing lithium ions, and may contain a positive electrode binder, a positive electrode conductive assistant agent, a dispersing agent, or other materials according to design. The same detailed description as described for the negative electrode binders and negative electrode conductive assistant agent, for example, is then given for the positive electrode binder and the positive electrode conductive assistant agent.

The positive electrode material is preferably a compound containing lithium. Examples of the lithium-containing compound include a complex oxide composed of lithium and a transition metal element, and a phosphate compound containing lithium and a transition metal element. Among them, a compound containing at least one of nickel, iron, manganese, and cobalt is preferable for the positive electrode material. The chemical formula of this compound is expressed by, for example, LiₓM1O₂ or Li_{y}M2PO₄, where M1 and M2 represent at least one kind of transition metal elements, and "x" and "y" represent a value varied depending on a charging or discharging status of a battery, which typically satisfy 0.05≤x≤1.10 and 0.05≤y≤1.10.

As examples of the composite oxide having lithium and a transition metal element, a lithium cobalt composite oxide (LiₓCoO₂), a lithium nickel composite oxide (LiₓNiO₂), and a lithium nickel cobalt composite oxide can be mentioned. As examples of the lithium nickel cobalt composite oxide, lithium nickel cobalt aluminum composite oxide (NCA) and lithium nickel cobalt manganese composite oxide (NCM) can be mentioned.

Examples of the phosphate compound containing lithium and a transition metal element include a lithium iron phosphate compound (LiFePO₄), a lithium iron manganese phosphate compound (LiFe₁₋ᵤMnᵤPO₄ (0<u<1)). This is because higher battery capacity and excellent cycle characteristics are obtained using the positive electrode materials described above.

### [Negative electrode]

The negative electrode has a configuration similar to that of the above negative electrode 10 for a lithium-ion secondary battery shown in FIG. 4, and, for example, has the negative electrode active material layers disposed on both faces of the current collector. The negative electrode preferably has a negative electrode charge capacity larger than electrical capacitance (a battery charge capacity) provided by the positive electrode active material, for this negative electrode itself can inhibit the precipitation of lithium metal.

The positive electrode active material layer is formed partially on both faces of the positive electrode current collector. The negative electrode active material layer is also formed partially on both faces of the negative electrode current collector. Such a negative electrode may have, for example, an area at which the positive electrode active material layer is not present on the surface of the positive electrode current collector that the negative electrode active material layer faces. This area permits stable battery design.

A non-facing area, that is, the above area at which the positive and negative electrode active material layers do not face one another is hardly affected by charging and discharging. The status of the negative electrode active material layer is consequently retained since its formation. This enables repeatable investigation of the composition of negative electrode active material with high precision without being affected by charging and discharging.

### [Separator]

The separator separates the lithium metal or the negative electrode, prevents short circuit current due to contact of both electrodes, and passes lithium ions therethrough. This separator may be made of, for example, a porous film of synthetic resin or ceramics, or two or more stacked porous films. Examples of the synthetic resin include polytetrafluoroethylene, polypropylene, and polyethylene.

### [Electrolyte]

At least a part of the active material layers or the separator is impregnated with a liquid electrolyte (an electrolyte). This electrolyte is composed of electrolyte salt dissolved in a solvent and may contain other materials such as additives.

The solvent may be, for example, a non-aqueous solvent. Examples of the non-aqueous solvent include ethylene carbonate, propylene carbonate, butylene carbonate, dimethyl carbonate, diethyl carbonate, ethylmethyl carbonate, methylpropyl carbonate, 1,2-dimethoxyethane, and tetrahydrofuran. Among these, ethylene carbonate, propylene carbonate, dimethyl carbonate, diethyl carbonate, or ethylmethyl carbonate, or the combination thereof is preferable. Such solvent enables better performances. In this case, the dissociation of electrolyte salt and ionic mobility can be improved by combined use of a viscous solvent, such as ethylene carbonate or propylene carbonate, and a non-viscous solvent, such as dimethyl carbonate, ethylmethyl carbonate, or diethyl carbonate.

For an alloyed negative electrode, the solvent preferably contains at least one of halogenated chain carbonate ester and halogenated cyclic carbonate ester. Such a solvent enables the negative electrode active material to be coated with a stable coating at charging-discharging and particularly charging. The halogenated chain carbonate ester is chain carbonate ester having halogen as a constituent element (at least one hydrogen is substituted by halogen). In addition, the halogenated cyclic carbonate ester is cyclic carbonate ester having halogen as a constituent element (that is, at least one hydrogen is substituted by halogen).

The halogen is preferably, but not limited to, fluorine, for fluorine enables the formation of better coating than other halogens do. A larger number of halogens is better, for a more stable coating can be obtained which reduces a decomposition reaction of an electrolyte.

Examples of the halogenated chain carbonate ester include fluoromethyl methyl carbonate, difluoromethyl methyl carbonate. Examples of the halogenated cyclic carbonate ester include 4-fluoro-1,3-dioxolane-2-one, 4,5-difluoro-1,3-dioxolane-2-one.

The solvent preferably contains an unsaturated carbon bond cyclic carbonate ester as an additive, for this enables the formation of a stable coating on a negative electrode at charging and discharging and the inhibition of a decomposition reaction of the electrolyte. Examples of the unsaturated carbon bond cyclic carbonate ester include vinylene carbonate and vinyl ethylene carbonate.

In addition, the solvent preferably contains sultone (cyclic sulfonic acid ester) as an additive, for this enables improvement in chemical stability of a battery. Examples of the sultone include propane sultone and propene sultone.

In addition, the solvent preferably contains acid anhydride, for this enables improvement in chemical stability of the electrolyte. The acid anhydride may be, for example, propane disulfonic acid anhydride.

The electrolyte salt may contain, for example, at least one light metal salt such as lithium salt. Examples of the lithium salt include lithium hexafluorophosphate (LiPF₆), and lithium tetrafluoroborate (LiBF₄).

The content of the electrolyte salt in the solvent is preferably 0.5 mol/kg or more and 2.5 mol/kg or less. This content enables high ionic conductivity.

### [Method of Producing Laminate Film Type Secondary Battery]

Firstly, a positive electrode is produced with the above positive electrode material. A positive electrode mixture is created by mixing the positive electrode active material with as necessary the positive electrode binder, the positive electrode conductive assistant agent, and other materials, and dispersed in an organic solvent to form slurry of the positive-electrode mixture. The mixture slurry is then applied to a positive electrode current collector with a coating apparatus such as a die coater having a die head or a knife roll, and dried by hot air to obtain a positive electrode active material layer. The positive electrode active material layer is finally compressed with, for example, a roll press. In this case, heating may be performed, and the compression may be repeated multiple times.

Secondly, a negative electrode active material layer is formed on a negative electrode current collector to produce a negative electrode through the same procedure as in the above production of the negative electrode 10 for a lithium-ion secondary battery.

In producing the positive electrode and the negative electrode, the active material layers are formed on both faces of the positive and negative electrode current collector. In the both electrodes, the length of these active material layers formed on the faces may differ from one another (See FIG. 4).

Then, an electrolyte is prepared. With ultrasonic welding and so on, the positive electrode lead 32 is attached to the positive electrode current collector and the negative-electrode lead 33 is attached to the negative electrode current collector. The positive and negative electrodes and the separator interposed therebetween are stacked or wound to produce the wound electrode body 31 and a protecting tape is stuck to the outermost circumference of the body. The electrode body is flattened. The film-shaped outer part 35 is folded in half-value to interpose the electrode body therebetween. The insulating portions of the outer part are stuck to one another by heat sealing, thereby the wound electrode body is encapsulated with one direction is released. The close adhesion films are inserted between the outer part and the positive and negative electrode leads. The prepared electrolyte is introduced from the released side in a prescribed amount to perform the impregnation of the electrolyte under a vacuum. The released side is stuck by vacuum heat sealing. In this manner, the laminate film type lithium-ion secondary battery 30 is successfully produced.

### EXAMPLE

Hereinafter, the present invention will be more specifically described by showing Examples of the present invention and Comparative Examples, but the present invention is not limited to these Examples.

### (Example 1-1)

First, a negative electrode active material was produced by the following procedure. A mixed raw material of metallic silicon and silicon dioxide was introduced into a reaction furnace and evaporated under a vacuum atmosphere of 10 Pa to deposit the evaporated material on an adsorption plate. The deposit was sufficiently cooled and then taken out to pulverize the deposit with a ball mill. In thus obtained silicon compound particles, the value of "x" in SiOₓ was 1.0. The silicon compound particles were classified to adjust the particle sizes. Then, by performing thermal decomposition CVD in a range of 700°C to 1000°C, the surface of the silicon compound particles was coated with a carbon material to form a conductive carbon layer.

Subsequently, diethyl ether with reduced water content was used as the solvent for solution A and solution B, and lithium was inserted into the silicon compound particles by a redox method to modify the particles (Li-doping treatment). At this time, in order to reduce the amount of the substance having an OH group in the solvent, the solvent was dehydrated and the water content was controlled to 100 ppm or less with respect to diethyl ether.

Then, after the Li doping treatment, a heat treatment step (550°C, 6 hours) was performed. During this heat treatment step, Ar was flowed under positive pressure to suppress the mixing of O₂. The suppression of O₂ mixing was performed by controlling the device in order to reduce as much as possible O₂ that unintentionally enters due to the structure of the device.

The particle size and true density of the negative electrode active material particles thus obtained and the thickness of the carbon film were measured. In addition, the presence or absence of Li₆Si₂O₇, Li₂SiO₃ and Li₂Si₂O₅ was confirmed by ²⁹Si-MAS-NMR. Further, X-ray diffraction measurement using Cu-Kα ray was performed, and the crystallite size corresponding to the Si (111) crystal plane was determined.

Next, the prepared negative electrode active material (silicon oxide compound), graphite, conductive assistant agent 1 (carbon nanotube, CNT), conductive assistant agent 2 (carbon fine particles having a median diameter of about 50 nm), sodium polyacrylate, and carboxymethyl cellulose (hereinafter, referred to as CMC) were mixed at a dry mass ratio of 18.6:74.4:1:1:4:1, the mixture was diluted with pure water to prepare a negative electrode mixture slurry.

As the negative electrode current collector, an electrolytic copper foil with a thickness of 15 µm was used. This electrolytic copper foil contained each 70 ppm by mass of carbon and sulfur. Finally, the negative electrode mixture slurry was applied onto the negative electrode current collector, and subjected to drying at 100°C for 1 hour under a vacuum. The negative electrode active material layer was deposited in a deposited amount per unit area on a face of the negative electrode after drying (referred to as an area density) of 7.0 mg/cm².

Subsequently, solvent (ethylene carbonate (EC), and dimethyl carbonate (DMC)) were mixed, followed by dissolving electrolyte salt (lithium hexafluorophosphate (LiPF₆)) to prepare an electrolyte. In this case, the solvent composition was set to EC:DMC=30:70 in a volume ratio, and the content of the electrolyte salt was set to 1 mol/kg based on the solvent. As additives, vinylene carbonate (VC) and fluoroethylene carbonate (FEC) were added in an amount of 1.0% by mass and 2.0% by mass, respectively.

Next, a coin battery was assembled as follows. First, a Li foil having a thickness of 1 mm was punched to a diameter of 16 mm and attached to an aluminum clad. The obtained negative electrode was punched to a diameter of 15 mm, faced with a Li foil via a separator, and an electrolyte was injected to prepare a 2032 coin battery.

The initial efficiency was measured under the following conditions. First, charge rate was set approximately at 0.03C. In this case, the charging was performed at CCCV mode. The CV was 0 V, and the end current was 0.04 mA. CC discharge was carried out by setting the discharge rate at 0.03C and discharge voltage to be 1.2 V.

To investigate the first-time charge-discharge characteristics, a first-time efficiency (hereinafter, also referred to as an initial efficiency) was calculated. The first-time efficiency was calculated from the expression shown by First-time Efficiency (%) = (First-time Discharge Capacity/First-time Charge Capacity)×100.

In addition, from the initial data obtained above, the positive electrode of the laminated film type secondary battery was designed and the battery was evaluated (evaluation of cycle characteristics).

The design of the positive electrode of the laminated film type secondary battery was performed as follows. First, the positive electrode was charged and discharged with the counter electrode as Li, and the positive electrode capacity was determined. The charging potential was set to 4.35V, which is 50 mV higher than the charging potential (4.3V) of the cell used for evaluating the cycle characteristics, and the discharge voltage was set to 2.5V. Then, using the negative electrode data when the initial charge-discharge characteristics were investigated and the initial data at the time of charging/discharging the positive electrode, the value of the formula represented below was calculated, 100 × ((positive electrode capacity)-(irreversible capacity of the negative electrode))/(reversible capacity of the negative electrode), and the value was designed to have a positive electrode area density in a range of 90% to 95% (the amount of the positive electrode active material layer deposited per unit area of the positive electrode after drying).

Further, as the positive electrode active material, 95 parts by mass of LiCoO₂, which was a lithium cobalt composite oxide, 2.5 parts by mass of a positive electrode conductive assistant agent (acetylene black), and 2.5 parts by mass of a positive electrode binder (polyfluorinated vinylidene: Pvdf) were mixed to obtain a positive electrode mixture. Subsequently, the positive electrode mixture was dispersed in an organic solvent (N-methyl-2-pyrrolidone: NMP) to obtain a paste-like slurry. Subsequently, the slurry was applied to both sides of the positive electrode current collector with a coating device having a die head, and dried with a hot air type drying device. Finally, compression molding was performed with a roll press.

As the negative electrode, one prepared by the same procedure as the electrode containing the silicon-based active material of the above test cell was used.

As the electrolyte, one prepared by the same procedure as the electrolyte of the above test cell was used.

Then, a laminated film type lithium-ion secondary battery was assembled as follows. First, an aluminum lead was attached to one end of the positive electrode current collector with ultrasonic welding, and a nickel lead was welded to one end of the negative electrode current collector. Subsequently, the positive electrode, a separator, the negative electrode, and a separator were laminated in this order, and wound in the longitudinal direction to produce a wound electrode body. The end of the winding was fixed with a PET protecting tape. The separator used herein was a laminate film of 12 µm in which a film mainly composed of porous polyethylene was sandwiched by films mainly composed of porous polypropylene. Then, the electrode body was put between outer parts, and then peripheries excluding one side are hot melted, and thereby the electrode body was stored in the outer parts. The outer part was an aluminum laminate film in which a nylon film, an aluminum foil, and a polypropylene film were laminated. Then, the electrolyte was introduced from the open side to perform the impregnation under a vacuum. The open side was then stuck by heat sealing.

The cycle characteristics (retention rate%) of the laminated film type lithium-ion secondary battery thus produced were investigated.

The cycle characteristics were investigated as follows. First, for battery stabilization, two cycles of charging and discharging were performed at 0.2C in an atmosphere of 25°C, and the discharge capacity of the second cycle was measured. The battery cycle characteristics were calculated from the discharge capacity of the third cycle, and the battery test was stopped at 100 cycles. Here, the measured discharge capacity was divided by the discharge capacity of the second cycle to calculate the capacity retention rate of each cycle (hereinafter, also simply referred to as the retention rate). Further, from the normal cycle, that is, from the third cycle, charging/discharging was performed with charging 0.7C and discharging 0.5C. The charging voltage was 4.3V, the discharge termination voltage was 2.5V, and the charging termination rate was 0.07C.

### (Example 1-2)

The same procedure as in Example 1-1 was carried out except that the solvent (diethyl ether) of the solution used for the insertion and modification of lithium was dehydrated, and the water content was controlled to 50 ppm or less with respect to diethyl ether.

### (Example 1-3)

The same procedure as in Example 1-2 was carried out except that the silicon compound particles coated with the carbon layer before the lithium doping treatment were Li-doped using a material dried at 150°C for 5 hours.

As described above, in Examples 1-1 to 1-3, the NMR peak intensity of Li₆Si₂07 was controlled.

### (Comparative Example 1)

In Comparative Example 1, it was carried out in the same manner as in Example 1-1 except that Li doping was not performed.

### (Comparative Example 2)

In Comparative Example 2, by controlling the Li-doping amount at the time of Li-doping, Li-doping was performed so that the initial efficiency was 85%, and the water content in the solvent was controlled so that Li₆Si₂O₇ was not generated.

### (Comparative Example 3)

In Comparative Example 3, Li doping was performed so that the initial efficiency was 90% by controlling the Li doping amount at the time of Li doping. However, Li₆Si₂O₇ was not generated, and it was controlled so that Li₂SiO₃ was mainly generated as Li silicate.

### (Examples 1-4, 1-5)

In Examples 1-4 and 1-5, the same procedure as in Example 1-1 was performed except that the Si crystallite size was changed. The crystallinity of the Si crystallite in the silicon compound particles was controlled by changing the vaporization temperature of the raw material or by heat treatment after the silicon compound particles were formed.

### (Examples 1-6 to 1-8)

In Examples 1-6 to 1-8, in addition to the conductive carbon layer formed by thermal decomposition CVD, a reaction suppression layer was further provided on the outermost layer after Li doping. Other than that, the procedure was basically the same as in Examples 1-1, 1-2, and 1-3, but in Examples 1-6, 1-7, and 1-8, measurements were taken to adjust Si crystallite size and amount ratio of Li silicate of the negative electrode active material to be the same as in Examples 1-1, 1-2, and 1-3 respectively after the reaction suppression layer was formed. For the Si crystallite size, the same parameters as in Examples 1-4 and 1-5 were adjusted. The amount ratio of Li silicate was adjusted by the amount of water in the solvent of the solution used for inserting and modifying lithium and the drying of the silicon compound particles before the lithium doping treatment.

The reaction suppression layer was formed as follows. After insertion and desorption of Li to the silicon compound particles on which the conductive carbon layer was formed by the oxidation-reduction method, tar layer was deposited on the outermost layer by sprinkling a diglyme solution in which tar was dissolved (1% by mass of tar) and dried. Then, it was heated in a range of 450°C to 700°C to form and modify Li silicate. At the same time, the tar on the outermost layer was decomposed and carbonized by this heating, so that a reaction suppressing layer made of another carbon layer was provided on the upper part of the conductive carbon layer obtained by CVD to form a two-layer structure.

Further, in Examples 1-6 to 1-8, measurement of the particle size, true density, and carbon layer thickness of the negative electrode active material particles, and confirmation of presence or absence of Li₆Si₂O₇, Li₂SiO₃, and Li₂Si₂O₅ by ²⁹Si-MAS-NMR, and calculation of crystallite size by X-ray diffraction measurement using Cu-Kα beam were performed after the reaction suppression layer was formed.

### (Examples 1-9 to 1-14)

In Examples 1-9 to 1-14, the same procedure as in Example 1-3 was carried out except that the particle size of the negative electrode active material particles was changed. The particle size of the negative electrode active material particles was changed by adjusting pulverizing conditions of the deposit at the time of producing the silicon compound particles.

From the results of the X-ray diffraction measurement in Examples 1-1 to 1-14, Li₂SiO₃ contained in the silicon compound particles of Examples 1-1 to 1-14 had crystallinity.

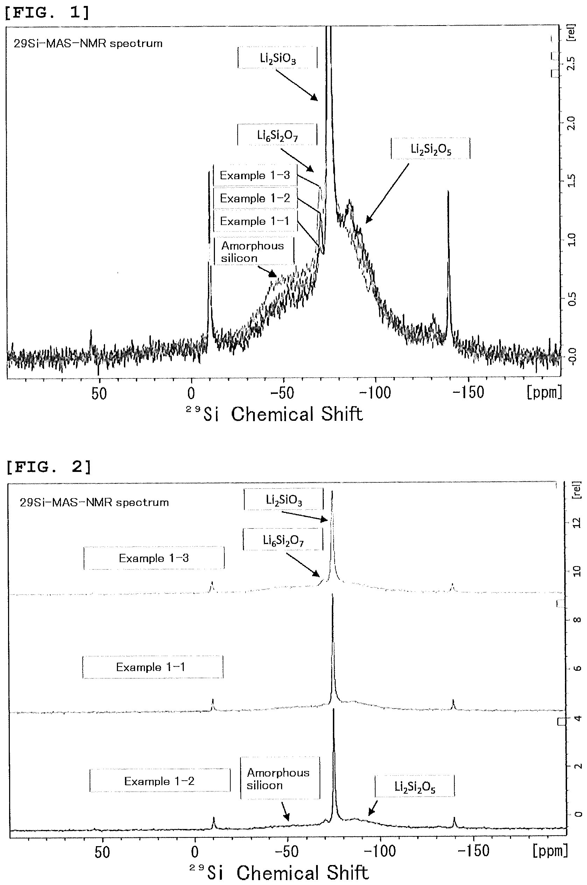

Table 1 shows the evaluation results of Examples 1-1 to 1-14 and Comparative Examples 1 to 1. Further, ²⁹Si-MAS-NMR spectra obtained from the silicon compound particles of Examples 1-1 to 1-3 and Comparative Example 2 are shown in FIGS. 2 and 3. Further, FIG. 1 shows an enlarged view of the measurement results based on the ²⁹Si-MAS-NMR spectra of Examples 1-1 to 1-3. The presence/absence of Li₆Si₂O₇, Li₂SiO₃, and Li₂Si₂O₅ (and the amount of Li₆Si₂O₇) in Table 1 was confirmed by the presence/absence of a peak appearing near -70 ppm and a peak appearing at positions around -72 to 75 ppm, and a peak appearing near -93 ppm respectively, as shown in FIG. 1.

**[Table 1]**

| | Retention rate at the 100th cycle | First time efficiency (%) | Particle size (µm) | True density (g/cm³) | Li₆Si₂O₇ | Li₂SiO₃ | Li₂Si₂O₅ | Carbon layer structure | Carbon' layer thickness (nm) | Si(111) crystallite |
|---|---|---|---|---|---|---|---|---|---|---|
| Comparative Example 1 | 88.0 | 68.0 | 6.5 | 2.25 | absent | absent | absent | 1 layer | 40 | 5.0nm |
| Comparative Example 2 | 90.4 | 85.2 | 6.5 | 2.27 | absent | present | present | 1 layer | 40 | 7.0nm |
| Comparative Example 3 | 90.8 | 90.1 | 6.5 | 2.27 | absent | present | absent | 1 layer | 40 | 2.0nm |
| Example 1-1 | 93.6 | 90.2 | 6.5 | 2.30 | present (small) | present | present | 1 layer | 40 | 2.0nm |
| Example 1-2 | 93.7 | 90.1 | 6.5 | 2.33 | present (middle) | present | absent | 1 layer | 40 | 2.5nm |
| Example 1-3 | 93.8 | 90.2 | 6.5 | 2.35 | present (large) | present | absent | 1 layer | 40 | amorphous |
| Example 1-4 | 93.1 | 90.1 | 6.5 | 2.30 | present (small) | present | present | 1 layer | 40 | 7.0nm |
| Example 1-5 | 92.8 | 90.1 | 6.5 | 2.31 | present (small) | present | present | 1 layer | 40 | 10nm |
| Example 1-6 | 93.8 | 90.1 | 6.5 | 2.30 | present (small) | present | present | 2 layers | 50 | 2.0nm |
| Example 1-7 | 93.6 | 90.3 | 6.5 | 2.32 | present (middle) | present | absent | 2 layers | 50 | 2.5nm |
| Example 1-8 | 94.0 | 90.1 | 6.5 | 2.34 | present (large) | present | absent | 2 layers | 50 | amorphous |
| Example 1-9 | 92.8 | 89.8 | 2.0 | 2.34 | present (large) | present | absent | 1 layer | 40 | amorphous |
| Example 1-10 | 93.6 | 90.2 | 4.0 | 2.34 | present (large) | present | absent | 1 layer | 40 | amorphous |
| Example 1-11 | 93.8 | 90.4 | 8.0 | 2.35 | present (large) | present | absent | 1 layer | 40 | amorphous |
| Example 1-12 | 93.6 | 90.4 | 10 | 2.35 | present (large) | present | absent | 1 layer | 40 | amorphous |
| Example 1-13 | 93.2 | 90.1 | 12 | 2.36 | present (large) | present | absent | 1 layer | 40 | amorphous |
| Example 1-14 | 92.8 | 89.8 | 15 | 2.36 | present (large) | present | absent | 1 layer | 40 | amorphous |

As can be seen from Table 1, in Comparative Example 1 in which Li doping was not performed, the Li silicate phase was not formed and the initial efficiency was low, so that the battery capacity was not sufficient. In addition, the capacity retention rate (cycle characteristics) up to 100 cycles was not sufficient. Further, in Comparative Example 2 in which Li-doping was performed so that the initial efficiency was 85%, improvement in the characteristics of the capacity retention rate was confirmed as compared with Comparative Example 1, but it could not be said to be sufficient. Further, even in Comparative Example 3 in which Li doping was performed so that the initial efficiency was 90%, although improvement in the capacity retention rate was confirmed as compared with Comparative Examples 1 and 2, Li₆Si₂O₇ was not contained, and therefore, compared with Example 1-1 to 1-14, the capacity retention rate could not be sufficiently improved.

In contrast to the comparative example, in Example 1-1, both the battery capacity and the cycle characteristics were preferable. It is thought that this is because, in Example 1-1, since the silicon compound particles contain both Li₆Si₂O₇ and Li₂SiO₃, the diffusivity of Li becomes preferable, and the Li silicate formation decomposition behavior at the time of initial deterioration of the cycle can be alleviated. On the other hand, in Comparative Example 1 which is not Li-doped, the initial efficiency cannot be improved because it does not contain a stable Li compound, and Comparative Example 2 and 3 which contains Li₂SiO₃ but does not contain Li₆Si₂O₇. It is considered that the diffusivity of Li cannot be improved and the deterioration at the initial stage of the cycle cannot be suppressed.

The Li dope produces Li₂Si₂O₅ when the initial efficiency is lower, as in Comparative Example 2, and the Li₂Si₂O₅ eventually becomes Li₂SiO₃. Li₆Si₂O₇ is an intermediate existence between Li₂SiO₃ and Li₂Si₂O₅, and the presence of this substance can improve the diffusivity of Li and improve the battery characteristics.

As described above, in Example 1-1 containing both Li₆Si₂O₇ and Li₂SiO₃, it was shown that the battery capacity could be increased with the improvement of the initial efficiency and the cycle characteristics of the battery were sufficient. Further, from the results of Examples 1-1, 1-2, and 1-3, it was found that when the peak intensity of Li₆Si₂O₇ is larger, more stable battery cycle characteristics could be obtained.

As shown in Table 1, from the results of Examples 1-4 and 1-5 in which the size of the Si crystallite was changed with respect to Example 1-1, the size of the Si crystallite was 7 nm (Example 1-4). It showed the best retention rate (93.1%), and when it was larger than 7 nm (Example 1-5), the retention rate was in the 92% range, so it was found that it was desirable to be 7 nm or less.

Further, as in Examples 1-6, 1-7 and 1-8, the carbon layer on the surface of the silicon compound particles has a substantially two-layer structure of a conductive carbon layer and a reaction suppressing layer on the conductive carbon layer. As a result, it was found that more stable battery cycle characteristics could be obtained as compared with Examples 1-1, 1-2, and 1-3 in which the carbon layer had a substantially one-layer structure. After coating the surface of the silicon compound particles with a carbon material by thermal decomposition CVD, when Li-doping is performed, the carbon layer that has been initially deposited is partially cracked and a new surface appears. In Examples 1-6, 1-7 and 1-8, it is considered that the cycle characteristics can be further improved by covering the new surface with the reaction suppression layer.

Further, from the results of Examples 1-9 to 1-14 in Table 1, when the particle size (median diameter) of the negative electrode active material particles is 4.0 µm or more and 12 µm or less, the capacity retention rate is preferable, and in particular, about 6.5 to 8 µm is found to be desirable. When the particle size is 4.0 µm or more, the reaction area per volume does not become too large, both the initial efficiency and the cycle retention rate do not decrease, and when the particle size is 12 µm or less, it is found that the particles did not crack due to the electric charge and discharge, and the characteristics did not deteriorate.

The present invention is not limited to the above embodiment. The above-described embodiment is an example, and any of the above-described embodiments having substantially the same configuration as the technical idea described in the claims of the present invention and having the same effect and effect is included in the technical scope of the present invention.

## Claims

1. A negative electrode active material containing negative electrode active material particles, comprising,
silicon compound particles containing a silicon compound containing oxygen, and
at least a part of a surface of the silicon compound particles is covered with a carbon layer,
wherein the silicon compound particles contain Li₆Si₂O₇ and Li₂SiO₃.

2. The negative electrode active material according to claim 1, wherein in the silicon compound particles, intensity A of a shoulder peak of amorphous silicon given in the vicinity of -50 ppm as a chemical shift value, intensity B of a peak derived from Li₆Si₂O₇, and intensity C of a peak derived from Li₂SiO₃, the peaks being obtained from a ²⁹Si-MAS-NMR spectrum, satisfy a relationship A<B<C.

3. The negative electrode active material according to claim 1 or 2, wherein true density of the negative electrode active material is larger than 2.3 g/cm³ and smaller than 2.4 g/cm³.

4. The negative electrode active material according to any one of claims 1 to 3, wherein Li₂SiO₃ contained in the silicon compound particles has crystallinity.

5. The negative electrode active material according to any one of claims 1 to 4, wherein intensity D of a peak derived from Li₂Si₂O₅ obtained from a ²⁹Si-MAS-NMR spectrum of the silicon compound particles is smaller than intensity B of a peak derived from Li₆Si₂O₇.

6. The negative electrode active material according to any one of claims 1 to 5, wherein the carbon layer has a substantially two-layer structure comprising a conductive carbon layer and a reaction suppressing layer on the conductive carbon layer.

7. The negative electrode active material according to any one of claims 1 to 6, wherein the negative electrode active material particles have a median diameter of 4.0 µm or more and 12 µm or less.

8. The negative electrode active material according to any one of claims 1 to 7, wherein a half-value width (2θ) of the diffraction peak caused by the Si (111) crystal plane obtained by X-ray diffraction using Cu-Kα rays is 1.2° or more, and size of crystallite corresponding the crystal plane is 7.0 nm or less.

9. A negative electrode comprising the negative electrode active material according to any one of claims 1 to 8.

10. A method for producing a negative electrode active material containing negative electrode active material particles comprising the steps of:
producing silicon compound particles containing silicon compounds containing oxygen,
coating at least a part of the silicon compound particles with a carbon layer and
inserting Li into the silicon compound particles and incorporating Li₆Si₂O₇ and Li₂SiO₃ into the silicon compound particles.
